(19) **Europäisches Patentamt**

**European Patent Office**

**Office européen des brevets**

(11) Veröffentlichungsnummer : **0 362 329 B1**

(12) **EUROPÄISCHE PATENTSCHRIFT**

(45) Veröffentlichungstag der Patentschrift :
**13.11.91 Patentblatt 91/46**

(51) Int. Cl.⁵ : **B61F 5/14, B61F 5/30,
B60G 11/107, F16F 1/26**

(21) Anmeldenummer : **89903156.1**

(22) Anmeldetag : **08.03.89**

(86) Internationale Anmeldenummer :
**PCT/EP89/00234**

(87) Internationale Veröffentlichungsnummer :
**WO 89/08575 21.09.89 Gazette 89/23**

(54) **GLEITSTÜCK.**

(30) Priorität : **08.03.88 DE 3807547**

(43) Veröffentlichungstag der Anmeldung :
**11.04.90 Patentblatt 90/15**

(45) Bekanntmachung des Hinweises auf die
Patenterteilung :
**13.11.91 Patentblatt 91/46**

(84) Benannte Vertragsstaaten :
**AT BE CH DE FR GB IT LI LU NL SE**

(56) Entgegenhaltungen :
**DE-A- 2 758 721
DE-C- 943 932
FR-A- 747 245
FR-A- 1 036 296
US-A- 3 014 736**

(73) Patentinhaber : **Waggon Union GmbH
W-5900 Siegen (DE)**

(72) Erfinder : **KRAMER, Rolf
Lohweg 2
W-5900 Siegen 21 (DE)**
Erfinder : **LOHMANN, Alfred
Rinsdorfer Str. 17
W-5900 Siegen-Eisern (DE)**
Erfinder : **BIEKER, Guido
Ennestweg 7
W-5942 Kirchhundem (DE)**
Erfinder : **BÜDENBENDER, Herbert
Feldwasserstr. 1
W-5902 Netphen 2 (DE)**

(74) Vertreter : **Dahlkamp, Heinrich-Leo, Dipl.-Ing.
Thyssen Industrie AG Patentabteilung Am
Thyssenhaus 1 Postfach 10 37 45
W-4300 Essen 1 (DE)**

# Beschreibung

Die Erfindung betrifft ein Gleitstück von insbesondere Schienenfahrzeugen welches horizontale Relativbewegungen in Längs- und Querrichtung zwischen Wagenkasten und Laufwerk oder zwischen Laufwerkteilen untereinander zuläßt, wobei zwischen den sich relativ zueinander bewegenden Teilen vertikal wirkende Federn angeordnet sind und das federbelastete Gleitstück über eine Gleitplatte die horizontalen Relativbewegungen abdämpft.

Es ist aus der Praxis bekannt, bei zentrisch mittels einer Drehpfanne, Drehkranz, Führungszapfen oder ähnlich geführten Drehgestellen elastische Abstützungen zwischen dem Wagenkasten und dem Drehgestellrahmen anzuordnen, die ein Ausdrehen des Drehgestells ermöglichen und die mittels zwischengeschalteten, abgefederten Gleitstücken gedämpfte Relativbewegungen zwischen dem Wagenkasten und dem Drehgestell ermöglichen, und eine weitgehend gleichmäßige Belastung durch den Wagenkasten erfolgt ohne übermäßig große Be- und Entlastung einzelner Räder. Die Anpreßkraft der federnden Gleitstücke und damit die Teilentlastung der Führungsmittel des Drehgestells kann durch entsprechende Vorspannung der federnden Gleitstücke verändert werden.

Bei den bekannten elastischen Abstützungen ist in der Regel eine feste Gleitplatte vorgesehen, die sich auf ein abgefedertes Gleitstück abstützt. Das abgefederte Gleitstück ist bei den bekannten Ausführungen mit Federelementen versehen, die eine vertikale Einfederung dieses elastischen Gleitstücks in begrenztem Umfang ermöglichen. Durch die Anordnung eines Federelementes zur vertikalen Nachgiebigkeit des Gleitstücks ist die Anordnung von zusätzlichen Führungen erforderlich, damit das Gleitstück bei den Relativbewegungen des Drehgestells zum Wagenkasten exakt geführt wird.

Die bekannten Anordnungen von elastischen Abstützungen sind daher in der Regel sehr aufwendig. Ein weiterer Nachteil besteht darin, daß die federnden Gleitstücke auch in belastetem Zustand noch horizontales Längsspiel besitzen. Hierdurch fehlt bei hohen Geschwindigkeiten der gewünschte Drehhemmungseffekt der seitlichen Gleitstücke, so daß die Drehgestelle zum Schlingern neigen.

Eine direkt wirkende Drehhemmung zwischen Wagenkasten und Laufwerk ist nun aus den DE-C-28 15 375 (& EP-A-0 004 585) und DE-A-28 42 211 (& EP-A-0 009 726) bekannt, bei der die feste Gleitplatte, wie bekannt, mit planer Gleitfläche und das federnde Gleitstück mit etwa konvexer Gleitfläche ausgebildet sind, wobei das federnde Gleitstück aus einer lediglich an ihren Längsenden abgestützten Blattfeder besteht, die längsspielfrei gelagert ist. Nachteilig bei diesen bekannten Ausführungen ist die gleichzeitig auftretende Reibung der Gleitstücke in Längs- und Querrichtung. Während in Längsrichtung eine gewisse Behinderung der Ausdrehbewegungen des Laufwerks wünschenswert ist, um ein Schlingern des Laufwerks und somit eine Instabilität zu vermeiden, wird in Querrichtung eine möglichst weiche Anbindung des Wagenkastens zur besseren Entkopplung zum Laufwerk gewünscht, um Resonanzen und damit Laufgüteminderungen zu vermeiden.

Die Erfindung hat sich zur Aufgabe gestellt, bei einem Gleitstück der eingangs genannten Art eine Möglichkeit zu finden, bei der die Wirkung der Reibung in einer horizontalen Richtung erhalten und in der anderen Richtung aufgehoben wird.

Diese Aufgabe wird dadurch gelöst, daß die Reibung des Gleitstücks an der Gleitplatte in einer der beiden horizontalen Richtungen aufgehoben ist durch Lagerung des Gleitstücks auf Koppelelementen, die begrenzt ein ungehindertes oder nahezu ungehindertes Verschieben des Gleitstücks in eine der beiden horizontalen Richtungen (längs oder quer) ermöglichen und das Gleitstück unverschieblich in die andere der beiden horizontalen Richtungen fixieren.

Die Koppelelemente sind als Wälz- oder Gleitlager ausgebildet, die ?wischen Gleitstück und Feder angeordnet sind. Gleitstück und Feder sind dabei entweder direkt durch die Koppelelemente oder unter Zwischenschaltung von Lagerstücken oder Bauteilen des Laufwerks miteinander verbunden.

Durch diese Anordnung wird auf vorteilhafte Weise das Gleitstück in eine der beiden horizontalen Richtungen (längs oder quer) fest angebunden und wirkt über sein Gegenlager direkt und spielfrei ausdrehungshemmend während das Gleitstück in die andere der beiden Richtungen begrenzt ungehindert verschieblich ist und somit eine ungehinderte weiche Anbindung in diese Richtung gewährleistet. Die Laufgüteeigenschaften des Fahrzeugs werden entscheidend erhöht.

Gemäß einer Ausführung der Erfindung sind die Koppelelemente dabei in gerade verlaufenden, deckungsgleich zueinander angeordneten Nuten oder Führungen des Gleitstücks und der Feder oder des Lagerstücks oder der Bauteile des Laufwerks angeordnet.

Vorteilhaft weisen die Nuten oder Führungen des Gleitstücks oder seines Gegenlagers an ihren Enden Begrenzungen für die Bewegungsfreiheit auf.

Es ist weiter zweckmäßig, daß das Gleitstück über die Koppelelemente auf seinem Gegenlager mit vertikalem Spiel fest gelagert ist.

In einer weiteren Ausgestaltung der Erfindung bestehen die Koppelelemente des Gleitstücks aus einer oberen und einer unteren metallischen Deckplatte mit Gummizwischenlage, wobei in der Gummizwischenlage vertikal angeordnete Blechstreifen mit Abstand parallel zueinander gerade verlaufend angeordnet sind. Die Blechstreifen in der Gummizwischenlage verhindern einerseits ein Verschieben der beiden metallischen Deckplatten gegeneinander in die eine Richtung (längs oder quer) und gewährleisten andererseits ein begrenzt nahezu ungehindertes Verschieben der beiden metallischen Deckplatten und damit des Laufwerks gegenüber dem Wagenkasten in die andere der beiden Richtungen.

Einzelheiten der Erfindung sind anhand von Ausführungsbeispielen in der Zeichnung erläutert.

Es zeigt

Fig. 1 einen Längsschnitt durch das Gleitstück nach einer Ausführung der Erfindung,

Fig. 2 den Schnitt nach Linie II-II der Fig. 1,

Fig. 3 einen Längsschnitt durch ein zweites Ausführungsbeispiel der Erfindung,

Fig. 4 einen Querschnitt durch das Ausführungsbeispiel nach Fig. 3.

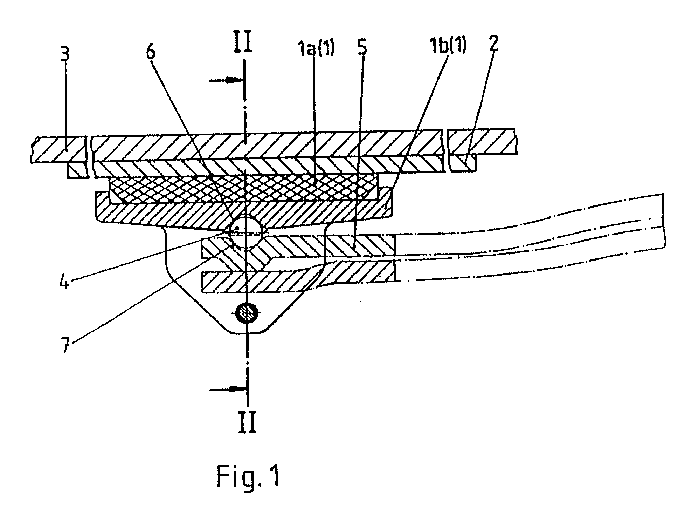

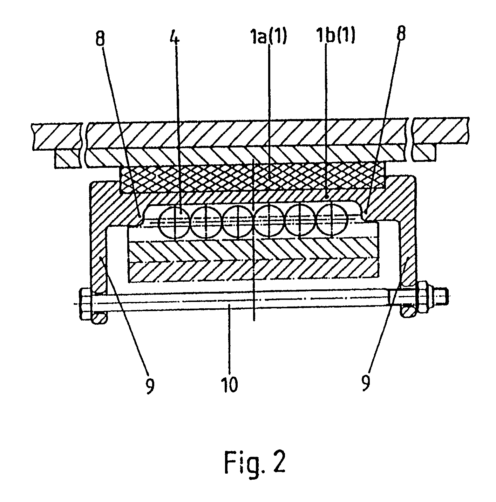

In dem Ausführungsbeispiel nach den Figuren 1 und 2 liegt das aus einem Reibstück 1a und einem Reibstückhalter 1b bestehende Gleitstück 1 flächig unter einer Gleitplatte 2 des Wagenkastens 3 an. Die Gleitplatte 2 ist dabei auf ihrer Gleitfläche eben ausgebildet und fest mit dem Wagenkasten 3 verbunden. Das Reibstück 1a des Gleitstücks 1 ist ebenfalls fest auf dem Reibstückhalter 1b des Gleitstücks 1 gelagert. Das Gleitstück 1 lagert über als Kugellager ausgebildete Koppelelemente 4 auf einer Feder 5, die mit dem Laufwerkrahmen verbunden ist. Zur Aufnahme der Koppelelemente 4 sind sowohl in dem Reibstückhalter 1b als auch in der Feder 5 deckungsgleich Nuten 6 bzw. 7 angeordnet, die gerade und in Querrichtung des Laufwerks verlaufend ausgebildet sind. Die Nut 6 des Reibstückhalters 1b ist an ihren Längsenden durch Begrenzungen 8 begrenzt, die die Bewegungsfreiheit der Koppelelemente 4 in Laufwerksquerrichtung begrenzen. Seitlich sind an dem Reibstückhalter 1b nach unten weisend Halterungen 9 angeordnet, die die Feder 5 seitlich überkragen. Ein beide Halterungen 9 verbindender, unterhalb der Feder 5 angeordneter Sicherungsbolzen 10 verhindert ein unbeabsichtigtes Abheben des Gleitstücks 1 von den Koppelelementen 4 und der Feder 5.

Beim Ausdrehen des Laufwerks gegenüber dem Wagenkasten 3 erfolgt eine spielfreie Dämpfung der Relativbewegung des Laufwerks gegenüber dem Wagenkasten in Fahrzeuglängsrichtung durch Anlage des federbelasteten Gleitstücks 1 über den Reibbelag 1a an der Reibplatte 2 des Wagenkastens 3. Die Relativbewegung in Fahrzeugquerrichtung wird dagegen nicht behindert. Die Feder 5 verschiebt sich nahezu unbehindert in Fahrzeugquerrichtung über die Koppelelemente gegenüber dem Gleitstück 1. Die starke Ankopplung in Fahrzeugquerrichtung vom Laufwerk zum Wagenkasten wird vermieden. Erst nach Ausschöpfung des definierten Querspiels erfolgt eine Dämpfung der Querbewegung über das Gleitstück 1 und die Gleitplatte 2.

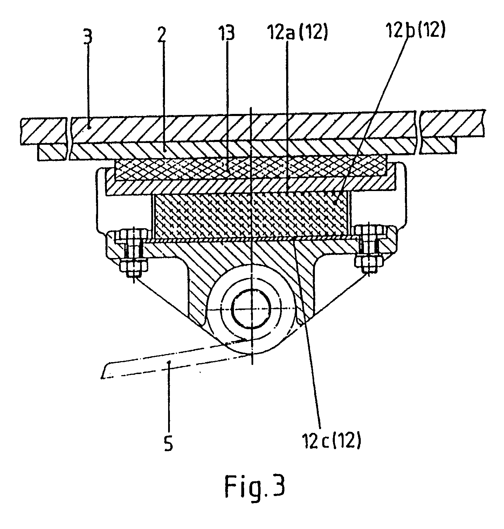

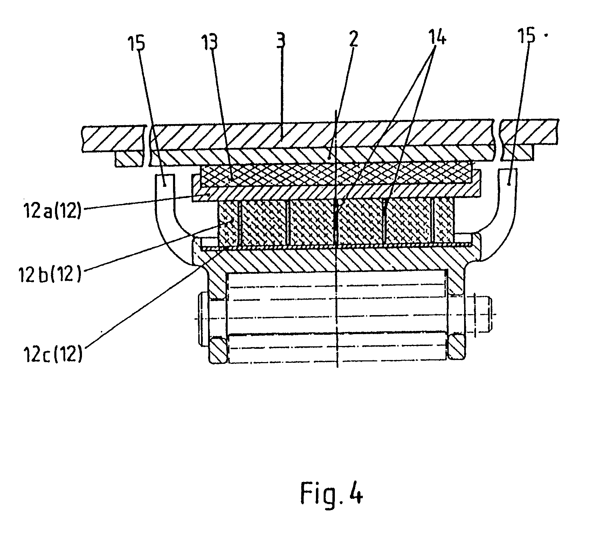

Bei dem in den Figuren 3 und 4 dargestellten Ausführungsbeispiel ist ebenfalls eine ebene Reibplatte 2 fähig

unter dem Wagenkasten 3 fest angeordnet. Ein auf einem Gummimetallfederelement 12 befestigter Reibbelag 13 liegt federbelastet unter der Reibplatte an. Das Gummimetallfederelement 12 lagert fest auf Laufwerkteilen, einer Feder oder dem Radsatz selbst. Das Gummimetallfederelement 12 besteht aus einer oberen metallischen Deckplatte 12a, einer Gummizwischenlage 12b und einer unteren metallischen Deckplatte 12c. In der Gummizwischenlage 12b sind zwischen den Deckplatten 12a und 12 c vertikal gerade Blechstreifen 14 gelagert. Diese Blechstreifen 14 sind dabei mit Abstand zueinander in Fahrzeuglängsrichtung angeordnet. Seitliche Begrenzungen 15 begrenzen die freie Querbewegung der beiden Deckplatten 12a und 12c gegeneinander.

Beim Ausdrehen des Laufwerks gegenüber dem Wagenkasten werden die beiden Deckplatten 12a und 12c in Fahrzeuglängsrichtung durch die Blechstreifen 14 unverschieblich miteinander verbunden. In Fahrzeuglängsrichtung wird die Ausdrehung des Laufwerks gegenüber dem Wagenkasten somit direkt und spielfrei über den Reibbelag 13 und die Gleitplatte 2 abgedämpft. In Laufwerksquerrichtung kann sich die obere Deckplatte 12a mit dem Reibbelag 13 dagegen gegenüber der unteren Deckplatte 12c des Gummimetallfederelementes 12 im Rahmen der Quersteifigkeit - resultierend aus der negativen Pendelsteifigkeit der Bleche und der Gummischubsteifigkeit - der Gummizwischenlage 12b bewegen, ohne daß zunächst eine Querverschiebung zwischen Reibbelag 13 und Gleitplatte 2 erfolgt.

## Patentansprüche

1. Gleitstück (1, 13) von insbesondere Schienenfahrzeugen welches horizontale Relativbewegungen in Längs- und Querrichtung zwischen Wagenkasten (3) und Laufwerk oder zwischen Laufwerkteilen untereinander zuläßt, wobei zwischen den sich relativ zueinander bewegenden Teilen vertikal wirkende Federn (5) angeordnet sind und das federbelastete Gleitstück über eine Gleitplatte (2) die horizontalen Relativbewegungen abdampft, **dadurch gekennzeichnet**, daß die Reibung des Gleitstücks an der Gleitplatte in einer der beiden horizontalen Richtungen aufgehoben ist durch Lagerung des Gleitstücks (1 und 13) auf Koppelelementen (4, 12) die begrenzt ein ungehindertes oder nahezu ungehindertes Verschieben des Gleitstücks (1, und 13) in eine der beiden horizontalen Richtungen (längs- oder quer) ermöglichen und das Gleitstück unverschieblich in die andere der beiden horizontalen Richtungen fixieren.

2. Gleitstück nach Anspruch 1, **dadurch gekennzeichnet**, daß die Koppelelemente (4) als Wälz- oder Gleitlager ausgebildet und zwischen Gleitstück (1) und Feder (5) angeordnet sind.

3. Gleitstück nach den Ansprüchen 1 und 2, **dadurch gekennzeichnet**, daß das Gleitstück (1) und die Feder (5) ntweder direkt durch die Koppelelemente (4) oder unter Zwischenschaltung von Lagerstücken oder Bauteilen des Laufwerks miteinander verbunden sind.

4. Gleitstück nach den Ansprüchen 1 bis 3, **dadurch gekennzeichnet**, daß die Koppelelemente (4) in gerade verlaufenden, deckungsgleich zueinander angeordneten Nuten (6 und 7) oder Führungen des Gleitstücks (1) und der Feder (5) oder des Lagerstücks oder des Bauteiles des Laufwerks angeordnet sind.

5. Gleitstück nach den Ansprüchen 1 bis 4, **dadurch gekennzeichnet**, daß die Nuten (6 oder 7) oder Führungen des Gleitstücks (1) oder seines Gegen lagers an ihren Enden Begrenzungen (8) aufwei sen.

6. Gleitstücke nach den Ansprüchen 1 bis 5, **dadurch gekennzeichnet**, daß das Gleitstück (1) über die Koppelelemente (4) auf seinem Gegenlager (Feder 5) mit vertikalem Spiel fest gelagert ist.

7. Gleitstück nach Anspruch 1, **dadurch gekennzeichnet**, daß die Koppelelemente des Gleitstücks (13) aus einer oberen und einer unteren metallischen Deckplatte (12a und 12c) mit Gummizwischenlage (12b) bestehen, wobei in der Gummizwischenlage (12b) vertikal angeordnete Blechstreifen (14) mit Abstand parallel zueinander gerade verlaufend angeordnet sind.

## Claims

1. Side bearer (1, 13) of, in particular, rail vehicles, which permits horizontal relative movements in the longitudinal and transverse direction between the coach body (3) and the running gear or between parts of the running gear, vertically acting springs (5) being arranged between the parts which move relative to one another and the spring-loaded side bearer damping the horizontal relative movements via a side bearer pad (2), characterised in that the friction of the side bearer on the side bearer pad is eliminated in one of the two horizontal directions by mounting the side bearer (1 and 13) on coupling elements (4, 12) which permit an unhindered or virtually unhindered displacement of the side bearer (1, and 13) in one of the two horizontal directions (longitudinal or transverse) to a limited extent and fix the side bearer in such a way that it cannot be displaced in the other of the two horizontal directions.

2. Side bearer according to Claim 1, characterised in that the coupling elements (4) are designed as rolling or sliding bearings and are arranged between the side bearer (1) and the spring (5).

3. Side bearer according to Claims 1 and 2, characterised in that the side bearer (1) and the spring (5) are connected to one another either directly via the coupling elements (4) or with the interposition of bearing pieces or components of the running gear.

4. Side bearer according to Claims 1 to 3, characterised in that the coupling elements (4) are arranged in straight-running, congruently arranged grooves (6 and 7) or guides of the side bearer (1) and of the spring (5) or of the bearing piece or of the component of the running gear.

5. Side bearer according to Claims 1 to 4, characterised in that the grooves (6 or 7) or guides of the side bearer (1) or of its abutment have limits (8) at their ends.

6. Side bearer according to Claims 1 to 5, characterised in that the side bearer (1) is mounted firmly, with vertical play, on its abutment (spring 5) via the coupling elements (4).

7. Side bearer according to Claim 1, characterised in that the coupling elements of the side bearer (13) comprise an upper and a lower metallic cover plate (12a and 12c) with a rubber intermediate layer (12b), vertically arranged sheet-metal strips (14) being arranged in the rubber intermediate layer (12b), parallel to one another, at a mutual spacing and running in a straight line.

## Revendications

1. Pièce de glissement (1, 13), en particulier pour véhicules ferroviaires, qui permet des déplacements relatifs horizontaux en direction longitudinale et transversale, entre caisse de voiture (3) et boggie ou entre parties de boggie, des ressorts (5) agissant verticalement étant disposés entre les parties se déplaçant relativement les unes par rapport aux autres, et la pièce de glissement rappelée élastiquement amortissant les déplacements relatifs horizontaux par l'intermédiaire d'une plaque de glissement (2), caractérisée par le fait que le frottement de la pièce de glissement sur la plaque de glissement est empêché dans l'une des deux directions horizontales, par le montage de la pièce de glissement (1 et 13) sur des éléments de couplage (4, 12) qui permettent de façon limitée un déplacement sans entrave, ou à peu près sans entrave, de la pièce de glissement (1 et 13) dans l'une des deux directions horizontale (longitudinale ou transversale) et assurent une fixation de la pièce de glissement sans déplacement dans l'autre des deux directions horizontales.

2. Pièce de glissement selon la revendication 1, caractérisée par le fait que les éléments de couplage (4) se présentent sous forme de paliers à roulement ou à glissement et sont disposés entre pièce de glissement (1) et ressort (5).

3. Pièce de glissement selon les revendications 1 et 2, caractérisée par le fait que la pièce de glissement (1) et le ressort (5) sont reliés entre eux soit directement par les éléments de couplage (4) soit avec interposition de pièces de palier ou d'éléments de construction du boggie.

4. Pièce de glissement selon les revendications 1 à 3, caractérisée par le fait que les éléments de couplage (4) sont disposés dans des rainures (6 et 7) rectilignes, venant en recouvrement mutuel, ou des guidages de la pièce de glissement (1) et du ressort (5) ou de la pièce de palier ou de l'élément de construction du boggie.

5. Pièce de glissement selon les revendications 1 à 4, caractérisée par le fait que les rainures (6 ou 7) ou les guidages de la pièce de glissement (1) ou de son contre-palier présentent à leurs extrémités des limitations (8).

6. Pièce de glissement selon les revendications 1 à 5, caractérisée par le fait que la pièce de glissement (1) est montée fermement, avec un jeu vertical, sur son contre-palier (ressort 5), par l'intermédiaire des éléments de couplage (4).

7. Pièce de glissement selon la revendication 1, caractérisée par le fait que les éléments de couplage de la pièce de glissement (13) se composent d'une plaque de recouvrement supérieure et d'une plaque de recouvrement inférieure (12a et 12c) métalliques à garniture intermédiaire en caoutchouc (12b), des bandes en tôle verticales (14) étant disposées de façon rectiligne, espacées parallèlement les unes par rapport aux autres, dans la garniture intermédiaire en caoutchouc (12b).

Fig. 1

Fig. 2

EP 0 362 329 B1

Fig. 3

EP 0 362 329 B1

Fig. 4